# FASCICULE DE BREVET EUROPEEN

(11) **EP 0 183 653 B1**
(45) Date de publication et mention de la délivrance du brevet: **03.08.1994**
(21) Numéro de dépôt: 85810567.9
(22) Date de dépôt: 29.11.1985
(51) Int. Cl.: A01G 27/00

(54) **Dispositif pour l'horticulture**
Gartenbauvorrichtung
Horticultural device

(30) Priorité: 29.11.1984 CH 5693/84
(43) Date de publication de la demande: 04.06.1986
(73) Titulaire: Maillefer, James, CH-1245 Collonge-Bellerive (CH)
(72) Inventeur: Maillefer, James, CH-1245 Collonge-Bellerive (CH)
(74) Mandataire: Meylan, Robert Maurice

(56) Documents cités:
- CH-A- 181 738
- DE-C- 197 328
- FR-A- 1 464 181
- FR-A- 1 586 144
- FR-A- 2 477 833
- GB-A- 674 471
- US-A- 4 324 070

## Description

Le brevet français N° 1 586 144 décrit un dispositif pour l'horticulture, destiné à être posé sur un bac contenant de l'eau de réserve, ce dispositif comprenant une paroi sensiblement verticale délimitant latéralement un espace ouvert sur toute sa partie inférieure et fermé à sa partie supérieure par une cloison horizontale ajourée par une série de trous, la base de la paroi présentant des orifices permettant à l'eau du bac de pénétrer dans ledit espace.

L'invention à pour but d'améliorer les conditions de croissance des plantes. Elle concerne un dispositif pour l'horticulture comprenant une paroi sensiblement verticale et une natte capillaire, cette paroi comprenant une cloison horizontale destinée à porter de la terre et présentant une serie de trous et au moins un passage pour la natte capillaire, cette paroi délimitant latéralement un expace ouvert sur toute sa partie inférieure et fermé à sa partie supérieure par la cloison horizontales, la partie de paroi délimitant ledit espace formant une base d'appui de l'enceinte destinée à être posée dans un récipient d'eau et présentant des ouvertures permettant à l'eau et à l'air de pénétrer dans ledit espace, cette natte capillaire couvrant la cloison horizontale au-dessus des trous, une partie de celle-ci pendant en dessous de la cloison horizontale afin de pouvoir tremper dans le récipient, caractérisé en ce que les ouvertures s'étendent de la base d'appui jusqu'à proximité de la cloison horizontale.

Le dessin annexe représente schématiquement et à titre d'exemple une forme d'exécution et des variantes du dispositif selon l'invention.

La figure 1 en est une vue en élévation.

La figure 2 en est une vue en élévation avec arrachement partiel.

La figure 3 en est une vue en coupe axiale de la figure 1.

La figure 4 en est une vue de dessus en plan.

La figure 5 montre la partie inférieure d'un dispositif constitué par deux parties principales.

La figure 6 montre la partie supérieure qui est destinée à être posée sur la partie illustrée à la figure 5.

La figure 7 montre une variante d'une partie inférieure du genre de celle représentée à la figure 5.

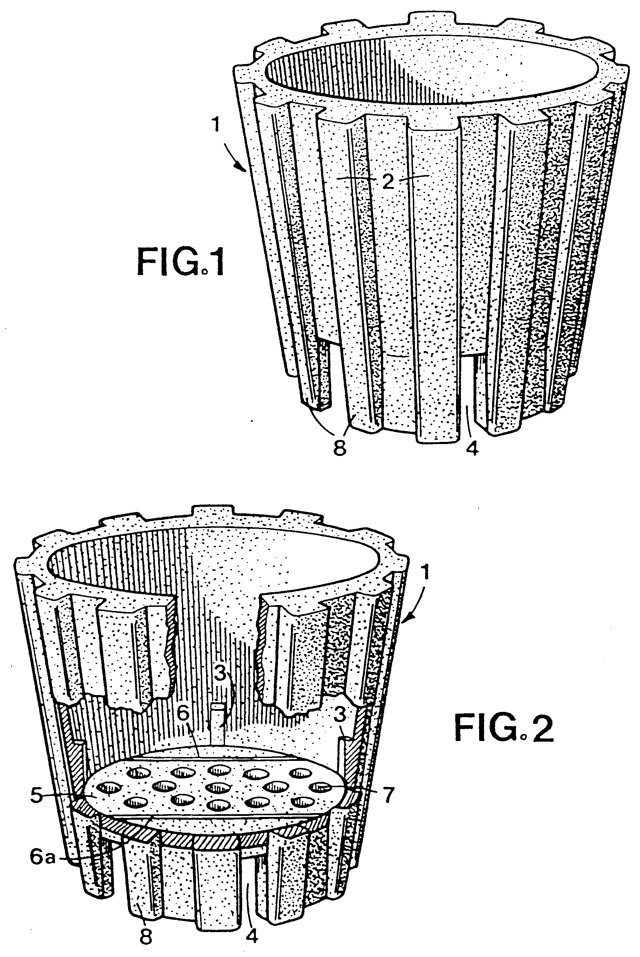

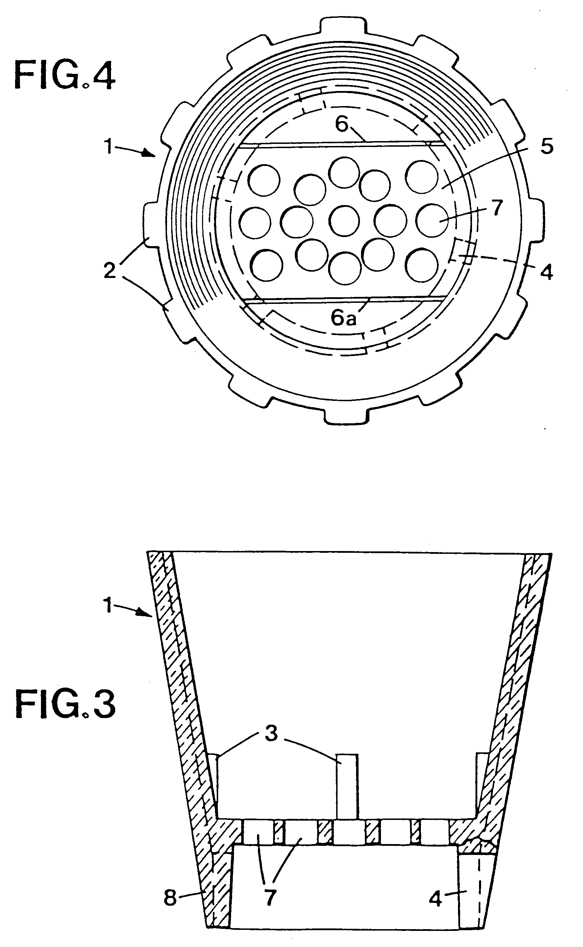

Les figures 1 à 4 se rapportent a une réalisation du dispositif sous forme d'un pot à fleurs. Ce pot peut être de forme tronconique moulé en polystyrène expansé ou en polystyrène choc ou être réalisé en toute autre matière ou résine synthétique, telle que celle qui est vendue dans le commerce sous la désignation de "sagex" par exemple.

Ce pot est renforcé par des cannelures externes 2 et présente des butées internes 3 qui servent de surface d'appui à un autre pot introduit dans le premier. Il est ainsi possible d'empiler les pots les uns dans les autres par emboitage.

A la partie inférieure du pot, des ouvertures de ventilation 4 sont ménagées entre les parties inférieures des cannelures 2, qui forment ainsi des supports d'appui faisant saillie sur la face inférieure du fond et jouent le rôle de pieds 8. Le pot présente un fond 5, venu d'une pièce par moulage, ce fond présentant deux fentes parallèles 6 et 6a constituant des passages pour une nate en une matière capillaire destinée à recouvrir ce fond 5. Cette natte capillaire peut être tissée ou non et elle peut notamment être réalisée en fibres synthétiques agglomérées et non tissées. Le fond 5 présente encore une série de trous 7 permettant l'aération de la terre qui sera placée au dessus de ce fond.

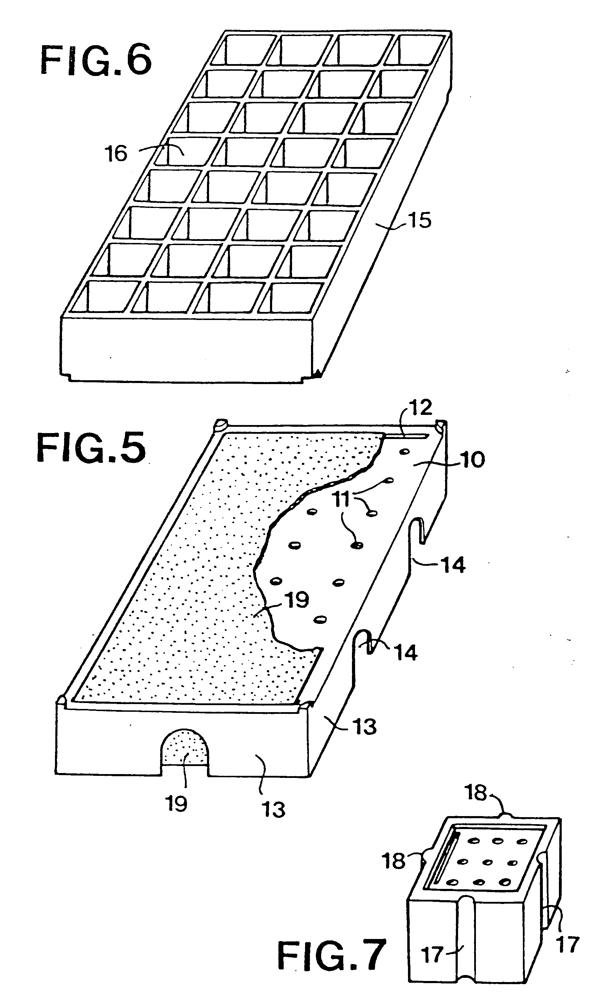

Comme le montre les figures 5 et 6, on peut réaliser des dispositifs convenant bien pour l'horticulture et dans lesquels il est possible de faire pousser plusieurs plants simultanément. Ce dispositif comprend une partie inférieure montrée à la figure 5 et comprenant un fond 10 percé de trous d'aération 11 et présentant deux fentes parallèles 12 pour le passage d'une natte capillaire 19. Ce fond présente des cloisons latérales 13 présentant des ouvertures 14 pour le passage de l'air et de l'eau. En effet, le dispositif est destiné à être placé dans un bac contenant de l'eau profonde de quelques centimètres. Ainsi, la natte capillaire s'inprègne d'eau pour mouiller toute la face supérieure du fond 10. Au-dessus de la partie inférieure, selon la figure 5, on place une partie supérieure 15, illustrée à la figure 6, qui présente la forme d'un cadre entourant une série d'alvéoles 16 s'ouvrant sur les deux faces principales de cette partie supérieure. Celle-ci constitue donc une enceinte destinée à recevoir le terreau pour la culture.

Pour la culture des plants, on pose généralement une série de parties inférieures, suivant la figure 5, dans un bac allongé contenant de l'eau et chacune de ces parties inférieures est recouverte d'une partie supérieure. selon la figure 6. Les alvéoles sont remplies de terreau et chacune d'elles est detinée à recevoir un plant. Lorsque la croissance de ces plants est suffisante, l'horticulteur peut les dépotter pour les repiquer dans un terrain plus grand.

Il est avantageux de prévoir des moyens de guidage par emboitage de parties en creux et en relief pour fixer la position entre les parties supérieure et inférieure.

La figure 7 montre une variante de la partie inférieure du dispositif, variante dans laquelle plusieurs parties peuvent être assemblées pour former une base de plus grande surface. A cet effet, deux côtés latéraux de cette partie inférieure présentent des rainures 17, tandis que les deux autres côtés opposés présentent des nervures 18. Il est ainsi possible d'assembler plusieurs parties semblables en engageant les nervures dans les rainures. Les parties assemblées peuvent être de grandeurs différentes, mais standards, afin de pouvoir s'assembler les unes avec les autres.

Le dispositif peut aussi être fabriqué sous forme d'une plaque ronde ou de toute autre forme, comme le fond des pots par exemple, en polystyrène expansé, destinée à être posée dans le fond de pots de culture à fond ouvert et bloquée à 5 cm environ du bas du pot. Les pots seraient dans ce cas en polystyrène choc ou en toute autre matière solide. Les pots seraient conçus selon le système décrit ci-dessus avec les pieds et les aérations. Les cannelures pourraient être à l'intérieur afin de favoriser l'enracinement des plantes.

Il est bien entendu que l'on peut prévoir de nombreuses variantes d'exécution sans sortir du cadre de l'invention.

Dans le cas de la partie inférieure, illustrée à la figure 5, les fentes 12 pourraient être omises, la natte capillaire étant alors simplement posée sur la partie inférieure et prévue suffisamment longue ou large pour qu'au moins un de ses bords retombe sur une ou plusieurs de ses cloisons latérales 13, afin de tremper dans l'eau contenue dans le bac.

Il va de soi que la partie supérieure pourrait également être constituée par plusieurs éléments juxtaposés ou même placés à distance les uns des autres.

Dans l'ensemble décrit, le dispositif a été prévu en résine synthétique expansée, mais il est clair que l'on peut utiliser tout autre matériau et notamment réaliser le dispositif en terre cuite.

## Revendications

1. Dispositif pour l'horticulture comprenant une paroi sensiblement verticale formant une enceinte destinée à recevoir de la terre et une natte capillaire (19), cette paroi comprenant une cloison horizontale (5, 10) destinée à porter cette terre et présentant une série de trous (7, 11) et au moins un passage (6, 6a, 12) pour la natte capillaire (19), cette paroi délimitant latéralement un expace ouvert sur toute sa partie inférieure et fermé à sa partie supérieure par la cloison horizontale (5, 10), la partie de paroi délimitant ledit espace formant une base d'appui de l'enceinte destinée à être posée dans un récipient d'eau et présentant des ouvertures (4) permettant à l'eau et à l'air de pénétrer dans ledit espace, cette natte capillaire (19) couvrant la cloison horizontale (5, 10) au-dessus des trous, une partie de celle-ci pendant en dessous de la cloison horizontale (5, 10) afin de pouvoir tremper dans le récipient, **caractérisé** en ce que les ouvertures (4) s'étendent de la base d'appui jusqu'à proximité de la cloison horizontale (5, 10).

2. Dispositif selon la revendication 1, **caractérisé** en ce qu'à une ouverture (4) de la paroi prévue sur un côté de l'espace correspond une autre ouverture (4) sur l'autre côté de l'espace, de façon à faciliter l'établissement d'un courant d'air.

3. Dispositif selon la revendication 2, **caractérisé** en ce que la cloison horizontale (5) est traversée par deux fentes (6, 6a) parallèles permettant le passage de la natte capillaire.

4. Dispositif selon la revendication 3, **caractérisé** en ce que la paroi s'élève au dessus de la cloison (5) pour constituer un espace supérieur destiné à recevoir du terreau pour la plante à cultiver.

5. Dispositif selon la revendication 4, **caractérisé** en ce qu'il est de forme tronconique et muni de butées internes (3) sur lesquelles peut prendre appui un second pot emboîté dans le premier.

6. Dispositif selon la revendication 5, **caractérisé** en ce qu'il est venu d'une pièce en polystyrène expansé.

7. Dispositif selon la revendication 5, **caractérisé** en ce que le pot est renforcé par des cannelures externes (2).

8. Dispositif selon l'une des revendications 1 à 3, **caractérisé** en ce qu'il comprend une pluralité d'espaces supérieurs séparés, ouverts vers le haut et vers le bas, destinés à être posés sur la cloison horizontale (10).

9. Dispositif selon la revendication 8, **caractérisé** en ce que la cloison (10) est de forme générale rectangulaire et présente deux fentes parallèles 12 s'étendant respectivement le long de deux de ses bords opposés.

10. Dispositif selon l'une des revendications 8 ou 9, **caractérisé** par des parties en creux et en relief, destinées à coopérer entre elles pour définir la position des espaces supérieurs par rapports à la cloison.

11. Dispositif selon l'une des revendications 8 à 10, **caractérisé** en ce que les espaces supérieurs sont constitués par plusieurs bacs juxtaposés pouvant être séparés les uns des autres.

## Claims

1. A horticultural device comprising a substantially vertical wall forming a container intended to receive soil and a capillary mat (19), said wall comprising a horizontal partition (5, 10) intended to support said soil and having a plurality of holes (7, 11) and at least one slot means (6, 6a, 12) for the engagement of the capillary mat (19), wherein said wall defines laterally a space, said space being opened over its lower part and closed at its upper part by the horizontal partition (5, 10), wherein the wall part defining said space forms a support base of the container intended to be placed into a water containing tray, wherein said wall part has apertures (4) for the passage of water and air into said space, wherein said capillary mat (19) overlays the horizontal partition (5, 10) above said holes, a part of said mat hanging downwardly from the horizontal partition (5, 10) to thereby be capable to soak in the tray, characterized in that the apertures (4) extend from the support base up to the vicinity of the horizontal partition (5, 10).

2. Device according to claim 1, characterized in that an aperture (4) of the wall located at one side of said space corresponds to another aperture (4) located at the other side of said space, whereby facilitating the circulation of air.

3. Device according to claim 2, characterized in that said horizontal partition (5) has a pair of parallel slots through which said mat is capable to pass.

4. Device according to claim 3, characterized in that said wall extends above said partition (5) to provide an upper space adapted to receive the soil for cultivating a plant.

5. Device according to claim 4, characterized in that it has a frustoconical shape and internal stacking means (3) for supporting a like pot nested within the first one.

6. Device according to claim 5, characterized in that it is made in one piece of expanded polystyrene.

7. Device according to claim 5, characterized in that the pot is reinforced by external ribs (2).

8. Device according to anyone of claims 1 to 3, characterized in that it comprises a plurality of discrete, top and bottom open-ended upper spaces, intended to be placed upon the horizontal partition (10).

9. Device according to claim 8, characterized in that the partition (10) has a generally rectangular shape and has two parallel slits (12) extending respectively along two opposite sides.

10. Device according to claim 8 or 9, characterized by hollow and protruding parts intended to cooperate for defining the location of the upper spaces relative to the partition.

11. Device according to anyone of claims 8 to 10, characterized in that the upper spaces consist of a plurality of side by side placed severable containers.

## Patentansprüche

1. Gartenbauvorrichtung mit einer im wesentlichen vertikalen Wand, die einen Behälter für Erde bildet, und mit einer Kapilarmatte (19), wobei die Wand eine horizontale Trennung (5, 10) zum Tragen dieser Erde, mit einer Mehrzahl von Löchern (7, 11) und wenigstens einem Durchlass (6, 6a, 12) für die Kapilarmatte (19) aufweist, wobei die Wand seitlich einen Raum abgrenzt, welcher an seinem ganzen unteren Teil offen ist und nach oben durch die horizontale Trennung (5, 10) abgeschlossen ist, wobei der Teil der Wand der den genannten Raum abgrenzt, die Auflage des Behälters bildet der dazu bestimmt ist, in ein Wassergefäss gesetzt zu werden und Oeffnungen (4) durch welche Wasser und Luft in den genannten Raum eindringen können, aufweist, wobei die Kapilarmatte die horizontale Trennung (5, 10) über den Löchern bedeckt, und ein Teil derselben von der horizontalen Trennung (5, 10) hinunterhängt, um in das Gefäss eintauchen zu können, dadurch gekennzeichnet, dass die Oeffnungen (4) sich von den Auflagen bis in die Nähe der horizontalen Trennung (15) erstrecken.

2. Gartenbauvorrichtung gemäss Anspruch 1, dadurch gekennzeichnet, dass einer Oeffnung (4) in der Wand auf der einen Seite des Raumes eine andere Oeffnung (4) auf der anderen Seite des Raumes entspricht, um die Durchlüftung zu erleichtern.

3. Gartenbauvorrichtung gemäss Anspruch 2, dadurch gekennzeichnet, dass die horizontale Trennung (5) zwei parallele Schlitze (6, 6a) aufweist, die den Durchlass der Kapilarmatte erlauben.

4. Gartenbauvorrichtung gemäss Anspruch 3, dadurch gekennzeichnet, dass die Wand sich oberhalb der Trennung (5) erhöht um einen oberen Raum zu bilden, der Gartenerde für die zu gedeihende Pflanze erhält.

5. Gartenbauvorrichtung gemäss Anspruch 4, dadurch gekennzeichnet, dass er eine kegelförmige Form aufweist, mit internen Stützen (3), auf welchen ein zweiter Topf, der in den ersten gesteckt ist, sich aufstützen kann.

6. Gartenbauvorrichtung gemäss Anspruch 5, dadurch gekennzeichnet, dass sie einstückig aus geschäumtem Polystyrol gebildet ist.

7. Gartenbauvorrichtung gemäss Anspruch 5, dadurch gekennzeichnet, dass der Topf durch äussere Rillen (2) verstärkt ist.

8. Gartenbauvorrichtung gemäss einem der Ansprüche 1 bis 3, dadurch gekennzeichnet, dass er eine Mehrzahl getrennter oberer Räume aufweist, die nach oben und nach unten offen sind und dazu bestimmt sind, auf die horizontale Trennung (10) aufgesetzt zu werden.

9. Gartenbauvorrichtung gemäss Anspruch 8, dadurch gekennzeichnet, dass die Trennung (10) von allgemein rechteckiger Form ist, und zwei parallele Schlitze (12), die sich jeweils entlang zweier entgegengesetzter Ränder erstrecken, aufweist.

10. Gartenbauvorrichtung gemäss einem der Ansprüche 8 oder 9, gekennzeichnet durch hervorstehende und hohle Teile, die dazu bestimmt sind, miteinander zusammenzuwirken um die Position der oberen Räume gegenüber der Trennung zu definieren.

11. Gartenbauvorrichtung gemäss einem der Ansprüche 8 bis 10, dadurch gekennzeichnet, dass die oberen Räume durch eine Mehrzahl nebeneinander gesetzter Behälter gebildet sind, die voneinander getrennt werden können.
